# EUROPÄISCHE PATENTSCHRIFT

(11) **EP 1 957 303 B1**
(45) Veröffentlichungstag und Bekanntmachung des Hinweises auf die Patenterteilung: **13.02.2019**
(21) Anmeldenummer: 06828610.3
(22) Anmeldetag: 05.12.2006
(51) Int. Cl.: B60J 7/185

(54) **VERSCHLUSSVORRICHTUNG FÜR EINE CABRIOLET-DACHKONSTRUKTION**
CLOSURE DEVICE FOR A CABRIOLET ROOF STRUCTURE
DISPOSITIF DE VERROUILLAGE POUR UNE CONSTRUCTION DE TOIT DE CABRIOLET

(30) Priorität: 05.12.2005 DE 102005058008
(43) Veröffentlichungstag der Anmeldung: 20.08.2008
(73) Patentinhaber: Webasto SE, 82131 Stockdorf (DE)
(72) Erfinder: POHL, Peter, 82349 Pentenried (DE); STENVERS, Jürgen, 81375 München (DE); WAGNER, Adam, 82110 Germering (DE); SCHMEIER, Thorsten, 82216 Germerswang (DE)
(74) Vertreter: Konnerth, Dieter Hans
(86) Internationale Anmeldenummer: PCT/DE2006/002159
(87) Internationale Veröffentlichungsnummer: WO 2007/065418

(56) Entgegenhaltungen:
- EP-A- 0 940 282
- EP-A1- 1 256 475
- DE-C1- 4 303 284

## Beschreibung

Die Erfindung betrifft eine Verschlussvorrichtung für eine Cabriolet-Dachkonstruktion mit zumindest einem Verschlusselement, das eine Offen-Stellung und eine Geschlossen-Stellung einnehmen kann, wobei der Verschlussvorrichtung zumindest zeitweise eine Sensoreinrichtung zugeordnet ist, welche die Offen-Stellung und die Geschlossen-Stellung detektieren kann. Weiterhin betrifft die Erfindung eine Dachkonstruktion für ein Cabriolet. Die Erfindung betriff auch ein Verfahren zur Überwachung einer Verschlussvorrichtung für eine Cabriolet-Dachkonstruktion, insbesondere einer erfindungsgemäßen Verschlussvorrichtung, wobei die Verschlussvorrichtung zumindest ein Verschlusselement aufweist, das eine Offen-Stellung und eine Geschlossen-Stellung einnehmen kann, und wobei der Verschlussvorrichtung zumindest zeitweise eine Sensoreinrichtung zugeordnet ist, welche die Offen-Stellung und die Geschlossen-Stellung detektieren kann.

Es ist insbesondere erforderlich, die Offen-Stellung und die Geschlossen-Stellung durch eine Sensoreinrichtung abzufragen, um eindeutige Informationen für die Steuerung zu erhalten, die die Bewegung der Dachkonstruktion beim Öffnen und Schließen des Cabriolet-Verdecks steuert. Nur wenn sich die Verschlusselemente eindeutig in ihrer Offen-Stellung befinden, kann der nächste beispielsweise hydraulische Bewegungsvorgang begonnen werden. Auf diese Weise werden Beschädigungen der Dachkonstruktion ausgeschlossen.

Beim Stand der Technik ist es üblich, zur Detektion der Offen-Stellung und der Geschlossen-Stellung des Verschlusselementes jeweils einen separaten Sensor beziehungsweise ein separates Schaltelement zu verwenden.

Aus der EP 0 940 282 A2 ist eine Steuereinrichtung für ein Fahrzeug mit einem am Fahrzeug ständig angeordneten ersten Dach, das z. B. als Softtop gebildet ist und zu Öffnen und zu Schließen ist, und einem abnehmbaren zweiten Dach, z. B. einem Hardtop, das bei geöffnetem ersten Dach das Fahrzeug abdecken kann, bekannt geworden. Eine Antriebseinrichtung dient zum Antrieb und Verstellen des ersten Daches, das in geöffnetem Zustand in einem von einem bewegbaren Verdeckkastendeckel verschließbaren Verdeckkasten abgelegt ist. An einem Windschutzscheibenrahmen ist eine Verschlusseinrichtung zum lösbaren Verbinden des jeweils geschlossenen Daches am Windschutzscheibenrahmen vorgesehen. Die Verschlusseinrichtung enthält eine Hakenaufnahme am Windschutzscheibenrahmen sowie einen jeweiligen von zwei Verschlusshaken, die Bestandteil einer ersten Verschlussbetätigung am Vorderende des ersten Daches bzw. einer zweiten Verschlussbetätigung am Vorderende des zweiten Daches sind. An der Hakenaufnahme ist ein als Mikroschalter ausgebildeter erster Geber oder Sensor derart angeordnet, dass er ein Signal abgibt, wenn einer der beiden Verschlusshaken in die Hakenaufnahme eingegriffen hat und die Verschlusseinrichtung eine Verbindung zwischen dem Windschutzscheibenrahmen und dem jeweiligen Dach hergestellt hat. Ein zweiter Geber oder Sensor ist im Bereich des Verdeckkastens angeordnet und gibt dann ein Signal ab, wenn sich das erste Dach in einer vollständig geöffneten Stellung befindet. Die beiden Signale der zwei Geber bzw. Sensoren werden einer Steuereinrichtung zugeführt, die die Ansteuerung der Antriebseinrichtung zum Betätigen des ersten Daches unterbindet, solange die Signale der zwei Geber oder Sensoren gleichzeitig vorliegen. Das aufgesetzte zweite Dach wird hierdurch erkannt, da ein für das erste Dach nicht plausibler Zustand der beiden Geber oder Sensoren vorliegt, denn das erste Dach kann nicht gleichzeitig vollständig geöffnet sein und durch die Verschlusseinrichtung mit dem Windschutzscheibenrahmen verbunden sein. Die Steuereinrichtung basiert somit auf dem Zusammenwirken der zwei Geber oder Sensoren und deren erzeugten Signalen.

Der Erfindung liegt die Aufgabe zugrunde, die gattungsgemäßen Verschlussvorrichtungen und die gattungsgemäßen Verfahren derart weiter zu bilden, dass die Offen-Stellung und die Geschlossen-Stellung des Verschlusselementes kostengünstiger als beim Stand der Technik detektiert werden kann. Diese Aufgabe wird durch die Merkmale der unabhängigen Ansprüche gelöst.

Vorteilhafte Ausführungsformen und Weiterbildungen der Erfindung ergeben sich aus den abhängigen Ansprüchen.

Die erfindungsgemäße Verschlussvorrichtung baut auf dem gattungsgemäßen Stand der Technik dadurch auf, dass die Sensoreinrichtung nur einen Sensor umfasst, der ein erstes Signal erzeugt, wenn die Offen-Stellung erreicht wird, und der ein zweites Signal erzeugt, wenn die Geschlossen-Stellung erreicht wird. Da bei dieser Lösung die Offen-Stellung und die Geschlossen-Stellung durch ein und denselben Sensor detektiert wird, halbiert sich die beim Stand der Technik erforderliche Anzahl von Sensoren. Dadurch können die Teilekosten erheblich gesenkt werden.

Bei der erfindungsgemäßen Verschlussvorrichtung ist vorzugsweise vorgesehen, dass das erste Signal deaktiviert wird, wenn die Offen-Stellung verlassen wird, und dass das zweite Signal deaktiviert wird, wenn die Geschlossen-Stellung verlassen wird. Sofern das erste Signal und/oder das zweite Signal ein binäres Signal ist, kann sowohl eine positive als auch eine negative Logik angewendet werden. Beispielsweise kann es vorteilhaft sein, nur dann tatsächlich eine Spannung zu erzeugen, wenn sich das Verschlusselement in Stellungen befindet, die es nur für kurze Zeitspannen einnimmt. Aus Sicherheitsgründen dürfte es jedoch in den meisten Fällen bevorzugt werden, die Offen-Stellung und die Geschlossen-Stellung durch ein aktives Signal anzuzeigen.

Bei besonders bevorzugten Ausführungsformen der erfindungsgemäßen Verschlussvorrichtung ist vorgesehen, dass das erste Signal und das zweite Signal identisch sind. Im einfachsten und besonders bevorzugten Fall ist sowohl das erste Signal als auch das zweite Signal durch einen einfachen HIGH-Pegel gebildet, während der Sensor immer dann einen LOW-Pegel erzeugt, wenn sich das Verschlusselement weder in der Offen-Stellung noch in der Geschlossen-Stellung befindet. Wenn das erste Signal und das zweite Signal identisch sind, ist es erforderlich den beim nächsten Auftreten des ersten beziehungsweise zweiten Signals vorliegenden Zustand zu kennen. Zu diesem Zweck kann beispielsweise die beim letzten Auftreten des ersten beziehungsweise zweiten Signals vorgelegene Stellung des Verschlusselements (Offen-Stellung oder Geschlossen-Stellung) in einem Speicher gespeichert werden, der beim nächsten Auftreten des ersten beziehungsweise zweiten Signals entsprechend aktualisiert wird.

Für die erfindungsgemäße Verschlussvorrichtung wird besonders bevorzugt, dass die Sensoreinrichtung einen von dem Sensor detektierbaren ersten Bereich und einen von dem Sensor detektierbaren zweiten Bereich aufweist, wobei der erste Bereich der Offen-Stellung und der zweite Bereich der Geschlossen-Stellung zugeordnet ist. Als Sensor kommen prinzipiell sowohl berührungslos arbeitende Sensoren als auch Sensoren in Betracht, die mit mechanischem Kontakt arbeiten. Beispielsweise sind Minischaltersensoren, optische Sensoren, kapazitive Sensoren, induktive Sensoren, oder entsprechende Mischformen möglich, wobei der erste Bereich und der zweite Bereich jeweils geeignet an den verwendeten Sensortyp angepasst sind. Beispielsweise können der erste und/oder der zweite Bereich mechanische Kontaktflächen aufweisen, optisch mehr oder weniger reflektieren oder kapazitive und/oder induktive Änderungen hervorrufen.

In diesem Zusammenhang wird es als besonders vorteilhaft erachtet, dass der erste Bereich und der zweite Bereich an dem Verschlusselement vorgesehen sind. Der Sensor ist dabei vorzugsweise zumindest zeitweise so angeordnet, dass er in der Offen-Stellung des Verschlusselementes von dem ersten Bereich und in der Geschlossen-Stellung des Verschlusselementes von dem zweiten Bereich aktiviert wird.

Bei bestimmter Ausführungsform der erfindungsgemäßen Verschlussvorrichtung kann vorgesehen sein, dass das Verschlusselement und der Sensor an dem gleichen Bauteil angeordnet sind. Diese Lösung kann beispielsweise vorteilhaft sein, wenn das entsprechende Bauteil unbeweglich ist und ein besonders kompakter Aufbau gewünscht wird, bei dem zudem die Verkabelung des Sensors äußerst einfach erfolgen soll.

Als besonders vorteilhaft werden jedoch Ausführungsformen der erfindungsgemäßen Verschlussvorrichtung erachtet, bei denen vorgesehen ist, dass das Verschlusselement und der Sensor an unterschiedlichen Bauteilen angeordnet sind.

Wenn zumindest eines der Bauteile ein bewegliches Bauteil ist, kann durch diese Lösung zusätzlich die Stellung des bewegten Bauteils erfasst werden. Somit können mit einem einzigen Sensor beispielsweise die drei folgenden Zustände detektiert werden: Verschlusselement befindet sich in der Offen-Stellung, Verschlusselement befindet sich in der Geschlossen-Stellung und bewegliches Bauteil hat sich bewegt, zum Beispiel wurde angehoben.

Bei einer besonders bevorzugten Ausführungsform der erfindungsgemäßen Verschlussvorrichtung ist vorgesehen, dass der Sensor ein Hallsensor ist und dass der erste Bereich und der zweite Bereich andere magnetische Eigenschaften aufweisen als die sie umgebenden Bereiche. Dabei können der erste und der zweite Bereich in besonders konstengünstiger Weise durch einfache Permanentmagnete gebildet sein, die beispielsweise in geeigneter Weise mit dem Verschlusselement verbunden oder in dieses integriert sind.

Weiterhin wird bevorzugt, dass das Verschlusselement einen Haken umfasst. Es ist jedoch klar, dass grundsätzlich beliebige Verschlusselemente in Betracht kommen, beispielsweise linear bewegliche Verschlussbolzen oder irgendwelche andere dem Fachmann gut bekannte Verriegelungselemente.

Sofern das Verschlusselement einen Haken umfasst, wird jedoch bevorzugt, dass der Haken eine Riegelfalle bildet, die mit einem Riegel zusammenwirkt. Der Riegel kann dabei beispielsweise durch einen Riegelstab oder Riegelbolzen gebildet sein, wobei es besonders bevorzugt wird, dass der Riegel an einem beweglichen Bauteil angeordnet ist.

Jede Dachkonstruktion für ein Cabriolet, die zumindest eine erfindungsgemäße Verschlussvorrichtung aufweist, fällt in den Schutzbereich der zugehörigen Ansprüche.

Im Zusammenhang mit einer derartigen Dachkonstruktion wird bevorzugt, dass sie auf ihrer linken Seite und auf ihrer rechten Seite jeweils zumindest eine Verschlussvorrichtung aufweist. Bei einer derartigen redundanten Ausführung wird die Funktionssicherheit noch weiter erhöht und eine begonnene Bewegung kann selbst dann noch sicher beendet werden, wenn ein Sensor defekt ist.

Ohne darauf beschränkt zu sein, kann im Zusammenhang mit der Dachkonstruktion weiterhin vorgesehen sein, dass zumindest ein Verschlusselement an einem Verdeckkastendeckel und zumindest ein Sensor an einem Verriegelungsarm angeordnet ist. Bei einer derartigen Lösung ist es beispielsweise möglich, neben der Offen-Stellung und der Geschlossen-Stellung des Verschlusselements zusätzlich eine Bewegung des Verriegelungsarms zu detektieren.

Das erfindungsgemäße Verfahren baut auf dem gattungsgemäßen Stand der Technik dadurch auf, dass es, wobei die Sensoreinrichtung nur einen Sensor umfasst, die folgenden Schritte umfasst:
- Erzeugen eines ersten Signals durch den der Sensoreinrichtung zugeordneten Sensor, wenn die Offen-Stellung erreicht wird, und
- Erzeugen eines zweiten Signals durch den Sensor, wenn die Geschlossen-Stellung erreicht wird.

Durch diese Lösung ergeben sich die im Zusammenhang mit der erfindungsgemäßen Verschlussvorrichtung erläuterten Eigenschaften und Vorteile in gleicher oder ähnlicher Weise, weshalb zur Vermeidung von Wiederholungen auf die entsprechenden Ausführungen zur erfindungsgemäßen Verschlussvorrichtung verwiesen wird.

Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit der erfindungsgemäßen Verschlussvorrichtung verwiesen wird.

Das erfindungsgemäße Verfahren weist vorzugsweise weiterhin die folgenden Schritte auf:
- Deaktivieren des ersten Signals, wenn die Offen-Stellung verlassen wird, und
- Deaktivieren des zweiten Signals, wenn die Geschlossen-Stellung verlassen wird.

Dabei wird bevorzugt, dass das erste Signal und das zweite Signal identisch sind.

Eine bevorzugte Weiterbildung des erfindungsgemäßen Verfahrens sieht vor, dass es weiterhin die folgenden Schritte umfasst:
- Durchführen eines Normierungslaufes, um festzustellen, welches der identischen Signale das erste Signal und welches das zweite Signal ist, und
- Speichern der Ergebnisse des Normierungslaufes.

Ein derartiger Normierungslauf kann beispielsweise vor der ersten Inbetriebnahme oder dann durchgeführt werden, wenn die Information, ob das erste beziehungsweise zweite Signal momentan der Offen-Stellung oder der Geschlossen-Stellung zugeordnet ist, "verloren" gegangen ist. Der Normierungslauf kann beispielsweise vorsehen, dass bei stehendem Fahrzeug alle Verschlussvorrichtungen in ihre Offen-Stellung gebracht werden. In diesem Fall ist klar, dass beim nächsten Auftreten des ersten beziehungsweise des zweiten Signals die Geschlossen-Stellung erreicht wurde.

Vorteilhafte Ausführungsformen der Erfindung werden nachfolgend anhand der zugehörigen Zeichnungen beispielhaft erläutert.

Es zeigen:
- Figur 1: eine schematische Darstellung einer Ausführungsform der erfindungsgemäßen Verschlussvorrichtung, wobei sich die beiden zu verschließenden Bauteile noch nicht in ihrer Verschluss-Stellung befinden;
- Figur 2: die Verschlussvorrichtung von Figur 1, wobei sich die beiden zu verschließenden Bauteile in ihrer Verschluss-Stellung befinden, das Verschlusselement jedoch noch seine Offen-Stellung einnimmt;
- Figur 3: die Verschlussvorrichtung von Figur 1, wobei sich die beiden zu verschließenden Bauteile in ihrer Verschluss-Stellung befinden und das Verschlusselement seine Geschlossen-Stellung eingenommen hat; und
- Figur 4: eine schematische Darstellung einer mit der erfindungsgemäßen Verschlussvorrichtung ausgestatteten Dachkonstruktion.

In den Figuren bezeichnen gleiche Bezugszeichen gleiche oder ähnliche Komponenten, die zur Vermeidung von Wiederholungen zumindest teilweise nur einmal erläutert werden.

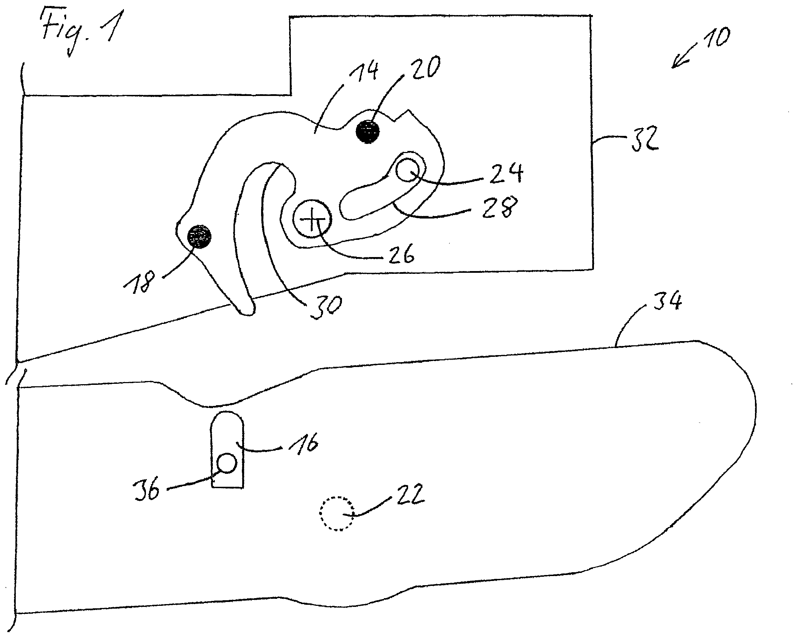

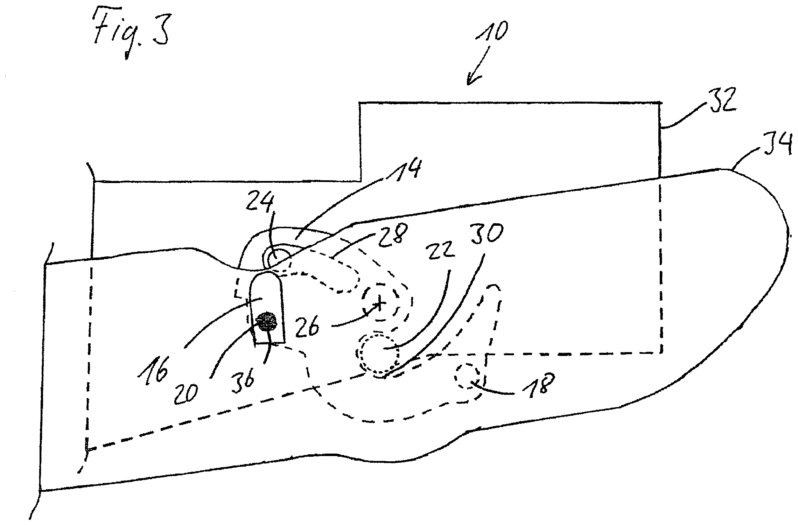

In Figur 1 ist ein Abschnitt eines ersten Bauteils 32 und ein Abschnitt eines relativ zu diesem beweglichen zweiten Bauteils 34 dargestellt. Bei dem ersten Bauteil 32 kann es sich beispielsweise um einen Verdeckkastendeckel handeln, während das zweite Bauteil 34 durch einen Verriegelungsarm einer Cabriolet-Dachkonstruktion gebildet sein kann. Das zweite Bauteil 34 weist einen stab- oder bolzenförmigen Riegel 22 auf, der sich bezogen auf die Darstellung in die Papierebenen hineinerstreckt und daher punktiert dargestellt ist. Weiterhin ist dem zweiten Bauteil 34 ein Sensor 16 in Form eines Hallsensors zugeordnet, der einen Messbereich 36 aufweist. Der Sensor 16 erzeugt ein Signal, wenn benachbart zu seinem Messbereich 36 ein Magnet angeordnet wird. Das erste Bauteil 32 ist mit einem Verschlusselement 14 ausgestattet, das eine Verriegelungskontur 30 aufweist, die insgesamt zur Form eines Hakens führt, der im Zusammenwirken mit dem Riegel 22 eine Riegelfalle bildet. Das Verschlusselement 14 ist um eine Drehachse 26 schwenkbar gelagert, wobei eine Verschwenkung des Verschlusselements 14 dadurch hervorgerufen wird, dass ein Antriebszapfen 24 von einer (nicht dargestellten) Antriebseinrichtung bezogen auf die Darstellung von Figur 1 horizontal nach links bewegt wird. Bei einer derartigen Bewegung nach links gleitet der Antriebszapfen 24 in einer in dem Verschlusselement 14 vorgesehenen Antriebsbahn 28 (vergleiche Figuren 1 und 3). Das Verschlusselement 14 weist einen von dem Sensor 16 detektierbaren ersten Bereich 18 und einen von dem Sensor 16 detektierbaren zweiten Bereich 20 auf. Dabei ist der erste Bereich 18 der Offen-Stellung des Verschlusselements 14 zugeordnet und der zweite Bereich 20 ist der Geschlossen-Stellung des Verschlusselements 14 zugeordnet. Sowohl der erste Bereich 18 als auch der zweite Bereich 20 ist durch einen jeweiligen Permanentmagnet gebildet.

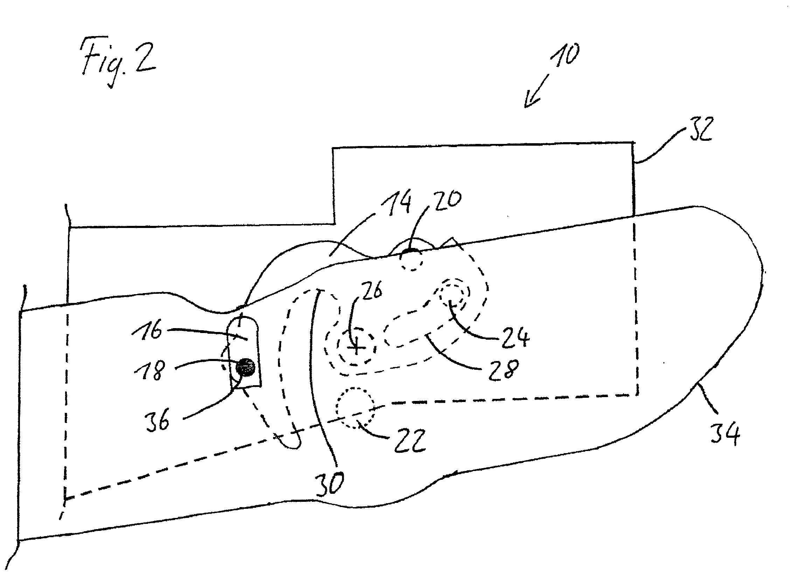

Figur 2 zeigt die Verschlussvorrichtung von Figur 1, wobei sich die beiden zu verschließenden Bauteile 32, 34 in ihrer Verschluss-Stellung befinden. Gemäß der Darstellung von Figur 2 befindet sich das Verschlusselement 14 noch in der auch in Figur 1 gezeigten Stellung, nämlich in seiner Offen-Stellung, das heißt das erste Bauteil 32 und das zweite Bauteil 34 sind noch nicht verschlossen. Wenn sich die Bauteile 32, 34 in der in Figur 2 dargestellten Verschluss-Stellung befinden und das Verschlusselement 14 seine Offen-Stellung eingenommen hat, kommt der durch einen Permanentmagnet gebildete erste Bereich 18 unmittelbar benachbart zum Messbereich 36 des Sensors 16 zu liegen, wie dies durch den in Figur 2 schwarz dargestellten Messbereich 36 angedeutet ist. Da es sich bei dem Sensor 16 um einen Hallsensor handelt, erzeugt der Sensor 16 dadurch ein (erstes) Signal. Der nicht dargestellten elektronischen Steuerung ist bekannt, dass der Sensor 16 zuletzt ein Signal erzeugt hat, als das Verschlusselement 14 seine Offen-Stellung eingenommen hat, um zu ermöglichen, dass sich das zweite Bauteil 34 weg bewegt. Da die Steuerung die Stellung des Verschlusselementes 14 inzwischen nicht verändert hat, schließt sie beim erneuten Auftreten des (ersten) Signals darauf, dass das zweite Bauteil 34 sich wieder auf das erste Bauteil 32 zu bewegt hat und sich jetzt in seiner Verschluss-Stellung befindet. Die Steuerung kann daher die nicht dargestellte Antriebseinheit anweisen, den Antriebszapfen 24 nach links zu bewegen, um die Bauteile 32, 34 zu verschließen beziehungsweise zu verriegeln.

Figur 3 zeigt die Verschlussvorrichtung von Figur 1, wobei sich die beiden Bauteile 32, 34 in ihrer Verschluss-Stellung befinden und das Verschlusselement 14 seine Geschlossen-Stellung eingenommen hat. Durch die Linearbewegung des Antriebszapfens 24 hat sich das Verschlusselement 14 um cirka 135° gegen den Uhrzeigersinn um die Drehachse 26 gedreht. Dadurch wurde der Riegel 22 in der Verriegelungskontur 30 des Verschlusselements 14 verriegelt. In der in Figur 3 dargestellten Geschlossen-Stellung des Verschlusselements 14 kommt der ebenfalls durch einen Permanentmagnet gebildete zweite Bereich 20 unmittelbar benachbart zum Messbereich 36 des Sensors 16 zu liegen. Nachdem der Sensor 16 während der Drehung des Verschlusselements 14 kein Signal erzeugt hat, da benachbart zu seinem Messbereich 36 kein Magnet vorhanden war, erzeugt der Sensor 16 nun erneut ein Signal, und zwar das zweite Signal, das bei der dargestellten Ausführungsform identisch zum ersten Signal ist. Beim erneuten Auftreten des von dem Sensor 16 erzeugten Signals schließt die Steuerung darauf, dass sich das Verschlusselement 14 nunmehr in seiner Geschlossen-Stellung befindet und das erste Bauteil 32 folglich sicher mit dem zweiten Bauteil 34 verschlossen beziehungsweise verriegelt ist.

Der Fachmann erkennt, dass bei der vorstehend erläuterten Verriegelung der Bauteile 32, 34 das erfindungsgemäße Verfahren zur Überwachung einer Verschlussvorrichtung durchgeführt wurde, weshalb auch zu dessen Erläuterung auf die vorstehenden Ausführungen verwiesen wird.

Im Übrigen ist klar, dass ein Öffnen der Verschlussvorrichtung beziehungsweise ein Entriegelungsvorgang in umgekehrter Reihenfolge als vorstehend erläutert durchgeführt wird.

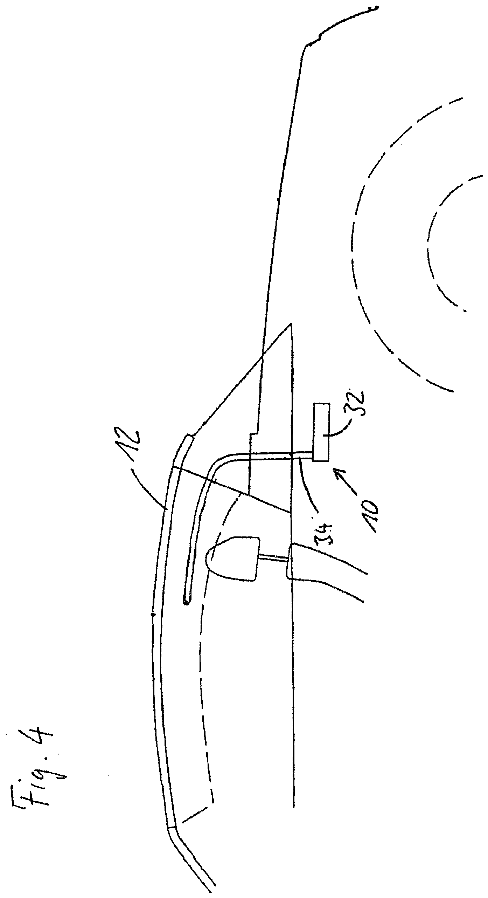

Figur 4 zeigt schematisch eine Dachkonstruktion 12 für ein Cabriolet. Dabei ist auf jeder Seite des Fahrzeugs eine erfindungsgemäße Verschlussvorrichtung 10 vorgesehen, wobei nur eine derartige Verschlussvorrichtung 10 angedeutet ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Verschlussvorrichtung
- 12: Dachkonstruktion
- 14: Verschlusselement
- 16: Sensor
- 18: erster Bereich
- 20: zweiter Bereich
- 22: Riegel
- 24: Antriebszapfen
- 26: Drehachse
- 28: Antriebsbahn
- 30: Verriegelungskontur
- 32: erstes Bauteil
- 34: zweites Bauteil
- 36: Messbereich

## Patentansprüche

1. Verschlussvorrichtung (10) für eine Cabriolet-Dachkonstruktion (12) mit zumindest einem Verschlusselement (14), das eine Offen-Stellung und eine Geschlossen-Stellung einnehmen kann, wobei der Verschlussvorrichtung (14) zumindest zeitweise eine Sensoreinrichtung (16, 18, 20) zugeordnet ist, welche die Offen-Stellung und die Geschlossen-Stellung detektieren kann, **dadurch gekennzeichnet, dass** die Sensoreinrichtung (16, 18, 20) nur einen Sensor (16) umfasst, der ein erstes Signal erzeugt, wenn die Offen-Stellung erreicht wird, und der ein zweites Signal erzeugt, wenn die Geschlossen-Stellung erreicht wird.

2. Verschlussvorrichtung (10) nach Anspruch 1, **dadurch gekennzeichnet, dass** das erste Signal deaktiviert wird, wenn die Offen-Stellung verlassen wird, und dass das zweite Signal deaktiviert wird, wenn die Geschlossen-Stellung verlassen wird.

3. Verschlussvorrichtung (10) nach Anspruch 1 oder 2, **dadurch gekennzeichnet, dass** das erste Signal und das zweite Signal identisch sind.

4. Verschlussvorrichtung (10) nach einem der vorhergehenden Ansprüche, **dadurch gekennzeichnet, dass** die Sensoreinrichtung (16, 18, 20) einen von dem Sensor (16) detektierbaren ersten Bereich (18) und einen von dem Sensor (16) detektierbaren zweiten Bereich (20) aufweist, wobei der erste Bereich (18) der Offen-Stellung und der zweite Bereich (20) der Geschlossen-Stellung zugeordnet ist.

5. Verschlussvorrichtung nach Anspruch 4, **dadurch gekennzeichnet, dass** der erste Bereich (18) und der zweite Bereich (20) an dem Verschlusselement (14) vorgesehen sind.

6. Verschlussvorrichtung nach Anspruch 4, **dadurch gekennzeichnet, dass** das Verschlusselement (14) und der Sensor (16) an dem gleichen Bauteil angeordnet sind.

7. Verschlussvorrichtung nach einem der vorhergehenden Ansprüche, **dadurch gekennzeichnet, dass** das Verschlusselement (14) und der Sensor (16) an unterschiedlichen Bauteilen angeordnet sind.

8. Verschlussvorrichtung nach einem der Ansprüche 4 bis 7, **dadurch gekennzeichnet, dass** der Sensor (16) ein Hallsensor ist und dass der erste Bereich (18) und der zweite Bereich (20) andere magnetische Eigenschaften aufweisen als die sie umgebenden Bereiche.

9. Verschlussvorrichtung nach Anspruch 8, **dadurch gekennzeichnet, dass** das Verschlusselement (14) einen Haken umfasst.

10. Verschlussvorrichtung nach einem der vorhergehenden Ansprüche, **dadurch gekennzeichnet, dass** der Haken eine Riegelfalle bildet, die mit einem Riegel (22) zusammenwirkt.

11. Dachkonstruktion (12) für ein Cabriolet, **dadurch gekennzeichnet, dass** sie zumindest eine Verschlussvorrichtung nach einem der vorhergehenden Ansprüche aufweist.

12. Dachkonstruktion (12) nach Anspruch 11, **dadurch gekennzeichnet, dass** sie auf ihrer linken Seite und auf ihrer rechten Seite jeweils zumindest eine Verschlussvorrichtung aufweist.

13. Dachkonstruktion (12) nach Anspruch 12 oder 13, **dadurch gekennzeichnet, dass** zumindest ein Verschlusselement an einem Verdeckkastendeckel und zumindest ein Sensor an einem Verriegelungsarm angeordnet ist.

14. Verfahren zur Überwachung einer Verschlussvorrichtung für eine Cabriolet-Dachkonstruktion (12), insbesondere einer Verschlussvorrichtung (10) nach einem der Ansprüche 1 bis 10, wobei die Verschlussvorrichtung (10) zumindest ein Verschlusselement (14) aufweist, das eine Offen-Stellung und eine Geschlossen-Stellung einnehmen kann, und wobei der Verschlussvorrichtung (10) zumindest zeitweise eine Sensoreinrichtung (16, 18, 20) zugeordnet ist, welche die Offen-Stellung und die Geschlossen-Stellung detektieren kann, **dadurch gekennzeichnet, dass** es, wobei die Sensoreinrichtung (16, 18, 20) nur einen Sensor (16) umfasst, die folgenden Schritte umfasst:
- Erzeugen eines ersten Signals durch den der Sensoreinrichtung (16, 18, 20) zugeordneten Sensor (16), wenn die Offen-Stellung erreicht wird, und
- Erzeugen eines zweiten Signals durch den Sensor (16), wenn die Geschlossen-Stellung erreicht wird.

15. Verfahren nach Anspruch 14, **dadurch gekennzeichnet, dass** es weiterhin die folgenden Schritte umfasst:
- Deaktivieren des ersten Signals, wenn die Offen-Stellung verlassen wird, und
- Deaktivieren des zweiten Signals, wenn die Geschlossen-Stellung verlassen wird.

16. Verfahren nach Anspruch 14 oder 15, **dadurch gekennzeichnet, dass** das erste Signal und das zweite Signal identisch sind.

17. Verfahren nach Anspruch 16, **dadurch gekennzeichnet, dass** es weiterhin die folgenden Schritte umfasst:
- Durchführen eines Normierungslaufes, um festzustellen, welches der identischen Signale das erste Signal und welches das zweite Signal ist, und
- Speichern der Ergebnisse des Normierungslaufes.

## Claims

1. Closure device (10) for a cabriolet roof structure (12), with at least one closure element (14) which can take up an open position and a closed position, wherein closure device (14) is at least temporarily assigned a sensor device (16, 18, 20) which can detect the open position and the closed position, **characterized in that** the sensor device (16, 18, 20) comprises just one sensor (16) which generates a first signal when the open position is reached, and which generates a second signal when the closed position is reached.

2. Closure device (10) according to Claim 1, **characterized in that** the first signal is deactivated when the open position is departed from, and **in that** the second signal is deactivated when the closed position is departed from.

3. Closure device (10) according to Claim 1 or 2, **characterized in that** the first signal and the second signal are identical.

4. Closure device (10) according to one of the preceding claims, **characterized in that** the sensor device (16, 18, 20) has a first region (18) which can be detected by the sensor (16) and a second region (20) which can be detected by the sensor (16), the first region (18) being assigned to the open position and the second region (20) being assigned to the closed position.

5. Closure device according to Claim 4, **characterized in that** the first region (18) and the second region (20) are provided on closure element (14).

6. Closure device according to Claim 4, **characterized in that** closure element (14) and the sensor (16) are arranged on the same component.

7. Closure device according to one of the preceding claims, **characterized in that** closure element (14) and the sensor (16) are arranged on different components.

8. Closure device according to one of Claims 4 to 7, **characterized in that** the sensor (16) is a Hall sensor, and **in that** the first region (18) and the second region (20) have different magnetic properties from the regions surrounding them.

9. Closure device according to Claim 8, **characterized in that** closure element (14) comprises a hook.

10. Closure device according to one of the preceding claims, **characterized in that** the hook forms a latch catch which interacts with a latch (22).

11. Roof structure (12) for a cabriolet, **characterized in that** it has at least one closure device according to one of the preceding claims.

12. Roof structure (12) according to Claim 11, **characterized in that** it has at least one closure device on its left side and on its right side respectively.

13. Roof structure (12) according to Claim 12 or 13, **characterized in that** at least one closure element is arranged on a folding top compartment cover and at least one sensor is arranged on a locking arm.

14. Method for monitoring a closure device for a cabriolet roof structure (12), in particular a closure device (10) according to one of Claims 1 to 10, wherein closure device (10) has at least one closure element (14) which can take up an open position and a closed position, and wherein closure device (10) is at least temporarily assigned a sensor device (16, 18, 20) which can detect the open position and the closed position, **characterized in that** the method, wherein the sensor device (16,18,20) only comprises one sensor (16), comprises the following steps:
- generating a first signal by means of the sensor (16) assigned to the sensor device (16, 18, 20) when the open position is reached, and
- generating a second signal by means of the sensor (16) when the closed position is reached.

15. Method according to Claim 14, **characterized in that** it furthermore comprises the following steps:
- deactivating the first signal when the open position is departed from, and
- deactivating the second signal when the closed position is departed from.

16. Method according to Claim 14 or 15, **characterized in that** the first signal and the second signal are identical.

17. Method according to Claim 16, **characterized in that** it furthermore comprises the following steps:
- carrying out a normalizing operation in order to establish which of the identical signals is the first signal and which is the second signal, and
- storing the results of the normalizing operation.

## Revendications

1. Dispositif de fermeture (10) pour une structure de toit de cabriolet (12), le dispositif de fermeture comprenant au moins un élément de fermeture (14) qui peut adopter une position ouverte et une position fermée, un dispositif de détection (16, 18, 20) étant associé au moins temporairement au dispositif de fermeture (14), lequel dispositif de détection peut détecter la position ouverte et la position fermée, **caractérisé en ce que** le dispositif de détection (16, 18, 20) ne comporte qu'un seul capteur (16) qui produit un premier signal lorsque la position ouverte est atteinte et qui produit un deuxième signal lorsque la position fermée est atteinte.

2. Dispositif de fermeture (10) selon la revendication 1, **caractérisé en ce que** le premier signal est désactivé lorsque l'on quitte la position ouverte, et **en ce que** le deuxième signal est désactivé lorsque l'on quitte la position fermée.

3. Dispositif de fermeture (10) selon la revendication 1 ou 2, **caractérisé en ce que** le premier signal et le deuxième signal sont identiques.

4. Dispositif de fermeture (10) selon l'une quelconque des revendications précédentes, **caractérisé en ce que** le dispositif de détection (16, 18, 20) comprend une première région (18) pouvant être détectée par le capteur (16) et une deuxième région (20) pouvant être détectée par le capteur (16), la première région (18) étant associée à la position ouverte et la deuxième région (20) étant associée à la position fermée.

5. Dispositif de fermeture selon la revendication 4, **caractérisé en ce que** la première région (18) et la deuxième région (20) sont prévues sur l'élément de fermeture (14).

6. Dispositif de fermeture selon la revendication 4, **caractérisé en ce que** l'élément de fermeture (14) et le capteur (16) sont disposés sur le même composant.

7. Dispositif de fermeture selon l'une quelconque des revendications précédentes, **caractérisé en ce que** l'élément de fermeture (14) et le capteur (16) sont disposés sur des composants différents.

8. Dispositif de fermeture selon l'une quelconque des revendications 4 à 7, **caractérisé en ce que** le capteur (16) est un capteur de Hall et **en ce que** la première région (18) et la deuxième région (20) présentent d'autres propriétés magnétiques que les régions les entourant.

9. Dispositif de fermeture selon la revendication 8, **caractérisé en ce que** l'élément de fermeture (14) comporte un crochet.

10. Dispositif de fermeture selon l'une quelconque des revendications précédentes, **caractérisé en ce que** le crochet forme un pêne qui coopère avec une gâche (22).

11. Structure de toit (12) pour un cabriolet, **caractérisée en ce qu'**elle comprend au moins un dispositif de fermeture selon l'une quelconque des revendications précédentes.

12. Structure de toit (12) selon la revendication 11, **caractérisée en ce qu'**elle comprend respectivement au moins un dispositif de fermeture sur son côté gauche et sur son côté droit.

13. Structure de toit (12) selon la revendication 12 ou 13, **caractérisée en ce qu'**au moins un élément de fermeture est disposé sur un couvercle de compartiment de capote et au moins un capteur est disposé sur un bras de verrouillage.

14. Procédé de surveillance d'un dispositif de fermeture pour une structure de toit de cabriolet (12), en particulier d'un dispositif de fermeture (10) selon l'une quelconque des revendications 1 à 10, le dispositif de fermeture (10) comprenant au moins un élément de fermeture (14) qui peut adopter une position ouverte et une position fermée, et un dispositif de détection (16, 18, 20) étant associé au moins temporairement au dispositif de fermeture (10), lequel dispositif de détection peut détecter la position ouverte et la position fermée, **caractérisé en ce qu'**il peut comporter les étapes suivantes, le dispositif de détection (16, 18, 20) ne comportant qu'un seul capteur (16) :
- production d'un premier signal au moyen du capteur (16) associé au dispositif de détection (16, 18, 20) lorsque la position ouverte est atteinte, et
- production d'un deuxième signal au moyen du capteur (16) lorsque la position fermée est atteinte.

15. Procédé selon la revendication 14, **caractérisé en ce que** qu'il comporte en outre les étapes suivantes :
- désactivation du premier signal lorsque l'on quitte la position ouverte, et
- désactivation du deuxième signal lorsque l'on quitte la position fermée.

16. Procédé selon la revendication 14 ou 15, **caractérisé en ce que** le premier signal et le deuxième signal sont identiques.

17. Procédé selon la revendication 16, **caractérisé en ce qu'**il comporte en outre les étapes suivantes :
- exécution d'une opération de normalisation pour déterminer lequel parmi les signaux identiques est le premier signal et lequel est le deuxième signal, et
- enregistrement des résultats de l'opération de normalisation.
